# EUROPEAN PATENT APPLICATION

(11) **EP 2 073 524 A1**
(43) Date of publication of application: **24.06.2009**
(21) Application number: 08715180.9
(22) Date of filing: 07.03.2008
(51) Int. Cl.: H04M 3/51

(54) **AN UPDATE METHOD, SYSTEM AND PLAY DEVICE THEREOF**

(30) Priority: 09.03.2007 CN 200710073471
(71) Applicant: Huawei Technologies Co., Ltd., Longgang District, Shenzhen Guangdong Province 518129 (CN)
(72) Inventor: WU, Yanyu, Guangdong Province 518129 (CN); LI, Diansheng, Guangdong Province 518129 (CN)
(74) Representative: Pfenning, Meinig & Partner GbR
(86) International application number: PCT/CN2008/070444
(87) International publication number: WO 2008/110102

(57) **Abstract**

A method for updating includes: by a playing apparatus, downloading a multimedia file to be played from a file server to a local storage location, and playing multimedia based on the old local multimedia file; setting a storage area for new multimedia files on the file server, where a new multimedia file is adapted to update an old multimedia file on the file server; by the playing apparatus, scanning the storage area for new multimedia files on the file server, and after finding the new file for updating the old local multimedia file, downloading the found new file to a new local storage location; and after receiving a request for playing the old multimedia file to be updated, playing multimedia based on the new multimedia file stored in the new local storage location. Embodiments of the present invention may update multimedia files without interrupting the playing of multimedia.

## Description

### Field of the Invention

The present invention relates to communication technologies, and in particular, to a method and system for updating and a playing apparatus thereof.

### Background of the Invention

In a communication system, announcements are played via an announcement file. That is, a playing apparatus in a network opens an announcement file on a file server according to the file path, reads voice data from the announcement file, converts the voice data into announcements, and plays the announcements to a user. In this mode, the announcement file is opened in real time, and is not closed until the playing of announcements is complete.

In the process of implementing the invention, the inventor finds that the conventional art has at least the following weaknesses:

The announcement file is stored on a special file server. Thus, when the announcement file needs to be updated, it is necessary to copy a new announcement file to replace the old announcement file so that the playing apparatus can play new announcements. However, if the announcement file is opened, that is, the announcement file is being played by a playing apparatus, the announcement file cannot be replaced, leading to failure to update announcements.

The announcement service is a general service in a communication system, and an announcement may be played at any time, especially in a call center system with heavy traffic. Therefore, it is quite possible that the announcement file fails to be updated. In this case, the user is unable to listen to new announcements timely. Before an announcement being played is updated, the announcement must be stopped so that the announcement file can be closed. However, this may interrupt the playing of the announcement and affect the announcement service.

### Summary of the Invention

Embodiments of the present invention provide a method and system for updating and a playing apparatus thereof so that a multimedia file can be updated without interrupting the playing of the multimedia file.

A method for updating provided in an embodiment of the invention includes:

storing in a new location a new multimedia file for updating an old multimedia file that is being played; and

upon receipt of a request for playing the old multimedia file, retrieving and playing the new multimedia file in the new storage location.

A system for updating provided in an embodiment of the invention includes:

a storage apparatus, adapted to store in a new location a new multimedia file for updating an old multimedia file that is being played; and

a playing apparatus, adapted to retrieve and play the new multimedia file in the new storage location upon receipt of a request for playing the old multimedia file.

A method for updating provided in an embodiment of the invention includes:

by a playing apparatus, downloading a multimedia file to be played from a file server to a local storage location, and playing multimedia based on the local multimedia file;

setting a storage area for storing new multimedia files on the file server, where a new multimedia file is adapted to update an old multimedia file on the file server;

by the playing apparatus, scanning the storage area for new multimedia files on the file server, and when finding the new file for updating the old local multimedia file, downloading the new file to a new local storage location; and

upon receipt of a request for playing the old multimedia file, playing multimedia based on the new multimedia file stored in the new local storage location.

A playing apparatus provided in an embodiment of the invention includes:

a scanning unit, adapted to scan a storage area for new multimedia files on a file server;

a file downloading unit, adapted to download a multimedia file to be played to a local storage location from the file server, and when the scanning unit finds a new file for updating an old local multimedia file, download the new file to a new local storage location; and

a playing unit, adapted to play multimedia based on the old local multimedia file before the file downloading unit downloads the new file to a local storage location, and play multimedia based on the new local multimedia file upon receipt of a request for playing the old multimedia file after the file downloading unit downloads the new file to a local storage location.

Embodiments of the present invention may achieve the following benefits:

Because a new multimedia file that is used for updating an old multimedia file being played is stored in a new storage location, the old multimedia file may be used when being played. When a new play request is received, the new multimedia file may be played. Thus, the old multimedia file may be updated without interrupting the playing of the multimedia file.

### Brief Description of the Drawings

Figure 1 is a flowchart of a method for playing an announcement in an embodiment of the present invention;

Figure 2 is a flowchart of a method for updating an announcement based on the method for playing shown in Figure 1 in an embodiment of the present invention;

Figure 3 is a block diagram of a playing apparatus in an embodiment of the present invention; and

Figure 4 is a block diagram of a playing apparatus in another embodiment of the present invention.

### Detailed Description of the Invention

A method for updating an announcement in an embodiment of the present invention includes: storing in a new storage location a new announcement file for updating an old announcement file (the old announcement file may be played currently); upon receipt of a request for playing the old announcement file, retrieving and playing the new announcement file in the new storage location. Thus, when the old announcement file is being played, the old announcement file may be updated without interrupting the playing of an announcement.

For example, new and old announcement files may be stored in different storage locations on a file server for storing announcement files. During the implementation, if an old announcement file is stored in a storage location with the query path ID of 0001 on the file server, a new announcement file for updating the old announcement file is stored in a storage location with the query path ID of 1000 on the file server. Afterwards, upon receipt of a request for playing the old announcement file, the new announcement file in the storage location with the ID of 1000 is retrieved and played, and the old announcement file with the ID of 0001 is deleted after being played. This facilitates the update of old announcements in a call center system with heavy traffic where old announcement files are always played, thus updating the announcements without interrupting the playing of announcements.

The preceding method for updating announcements may be based on a system for updating announcements. The system includes a storage apparatus, which is adapted to store in a new storage location a new announcement file for updating an old announcement file (the old announcement file may be played currently). For example, in the storage apparatus, a announcement new file for updating an old announcement file that is being played on a file server may be stored in a new storage area that is defined on the file server. The new storage area is different from the storage location where the old announcement file is stored. The system also includes a playing apparatus, which is adapted to: after receiving a request for playing the announcement file (old announcement file) that is being played, retrieve and play a new announcement file that is stored in the new storage location. The playing apparatus may periodically scan the new storage area that is defined on the file server. After the new announcement file is found, the playing apparatus retrieves and plays the new announcement file in the new storage location upon receipt of a request for playing the old announcement file that is being played. Or the playing apparatus may be notified of the update of the old announcement file that is being played and the storage location of the new announcement file. Upon receipt of the notification, the playing apparatus retrieves and plays the new announcement file in the new storage location when receiving a request for playing the old announcement file that is being played.

The system may further include a file deletion apparatus, which is adapted to delete the old announcement file after the old announcement file is played, thus saving the storage space.

The functions of the playing apparatus may be integrated into a existing playing apparatus so that the existing playing apparatus has the processing capability of the playing apparatus provided in this embodiment.

Based on the principles of the preceding method, an embodiment of the present invention provides a method for updating announcements that is applicable to a conventional system for playing announcements. With a view to updating an announcement, the following provides a new method for playing an announcement.

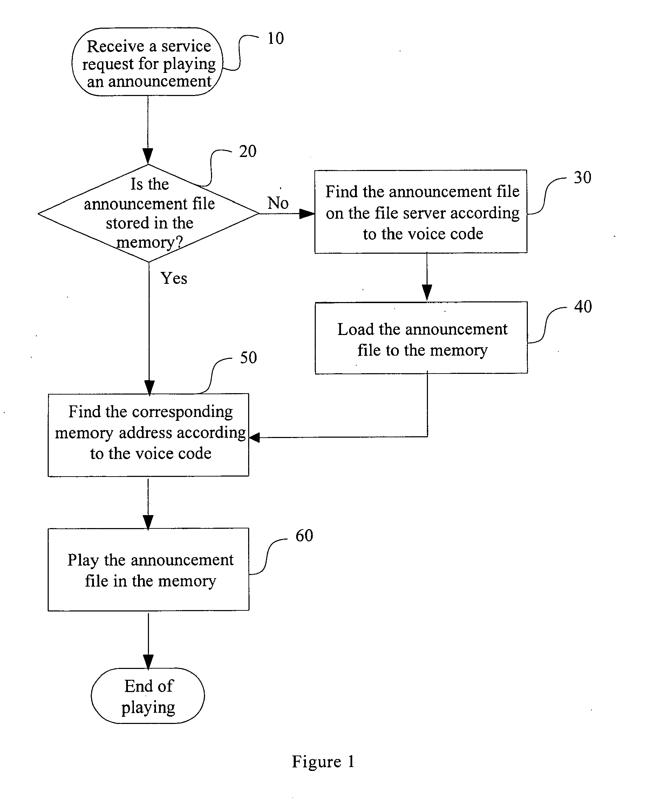

Figure 1 is a flowchart of a new method for playing an announcement in an embodiment of the present invention. The method includes the following blocks:

Block 10: Encode names of all announcement files according to an encoding rule and store the files on an announcement file server. The voice code information is carried in a request for playing an announcement that is originated by relevant services.

Block 20: The playing apparatus queries whether an announcement file is available in the memory of the playing apparatus corresponding to the voice code information carried in the request. If not, it goes to block 30; otherwise it skips to blaok 50.

Block 30: If the announcement file is not found, the playing apparatus reads the announcement file in the specified path on the announcement file server according to the voice code information carried in the request.

Block 40: The playing apparatus downloads the read announcement file and stores it in the local memory.

Block 50: After downloading the announcement file to the memory, the playing apparatus finds the memory address according to the voice code information carried in the request.

Block 60: The playing apparatus reads the announcement file that is stored in the found memory address, and plays the announcement file until the end of playing.

The playing apparatus may download the announcement file on the announcement file server and store it in the memory or flash memory of the playing apparatus. The announcement file may also be stored in a hard disk or other local storage media.

In the preceding method for playing an announcement, because each playing apparatus downloads the announcement file to be played to a local storage location, it is unnecessary to search for an announcement file on the file server in the case of playing an announcement. This may reduce the processing load of the file server and transmission traffic between the playing apparatus and the file server, alleviating the network transmission load.

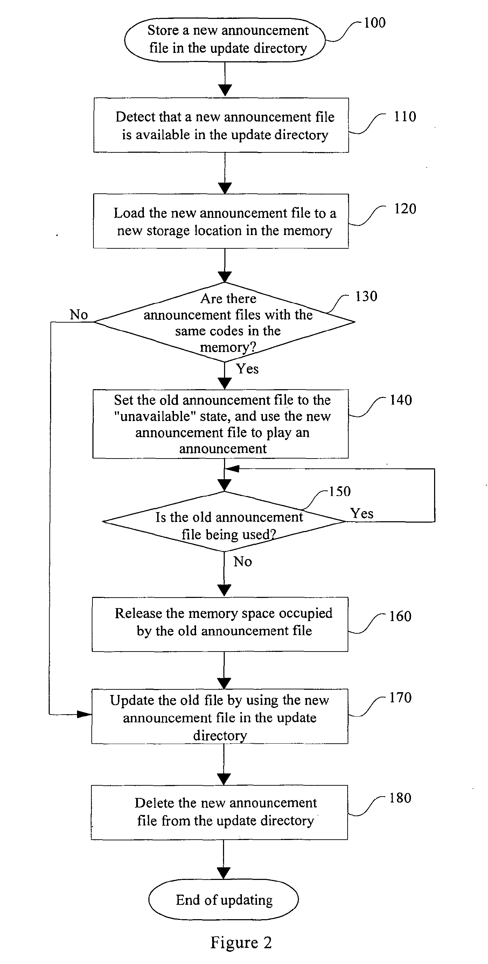

Figure 2 is a flowchart of a method for updating an announcement based on the method for playing shown in Figure 1 in an embodiment of the present invention, in which a special directory for updating an announcement file (supposing the directory is named update) is created on the announcement file server. The method for updating an announcement includes the following blocks:

Block 100: Store a new announcement file in the update directory.

If an announcement file on the file server needs to be updated, a new announcement file needs to be stored in the update directory, for example, through copy or via File Transfer Protocol (FTP).

Block 110: The playing apparatus may scan the announcement file stored in the update directory on the file server by using a preferred timing mechanism so as to detect that the announcement file for updating the old announcement file is available in the update directory in the local memory.

Block 120: The playing apparatus downloads the detected new announcement file to the local memory, and stores the new announcement file in a new storage location.

Block 130: The playing apparatus judges whether there is an old announcement file with the same code as the new announcement file in the memory of the playing apparatus. If yes, it goes to block 140; otherwise it skips to block 170.

Block 140: The playing apparatus sets the old announcement file in the current memory to the "unavailable" state. Upon receipt of a new request for playing an announcement, the playing apparatus uses the newly downloaded announcement file rather than the old announcement file to play the announcement.

Block 150: The playing apparatus checks whether the old announcement file is being used for playing an announcement. If the old announcement file is being used, for example, the announcement file is being used by some calls when being updated, it is necessary to wait for a period of time until the old announcement file is not used by the calls; if the old announcement file is not used, the playing apparatus executes block 160.

Block 160: If the old announcement file is not used, the playing apparatus deletes the old announcement file stored in the memory to release the memory space.

Block 170: Update the old announcement file on the file server with the new announcement file in the update directory on the file server.

Block 180: Delete the new announcement file from the update directory.

In a scenario that announcements are shared by multiple playing apparatus, a protection mechanism with specified duration needs to be set to ensure that the announcement file in the update directory is deleted after all the playing apparatus update the announcements.

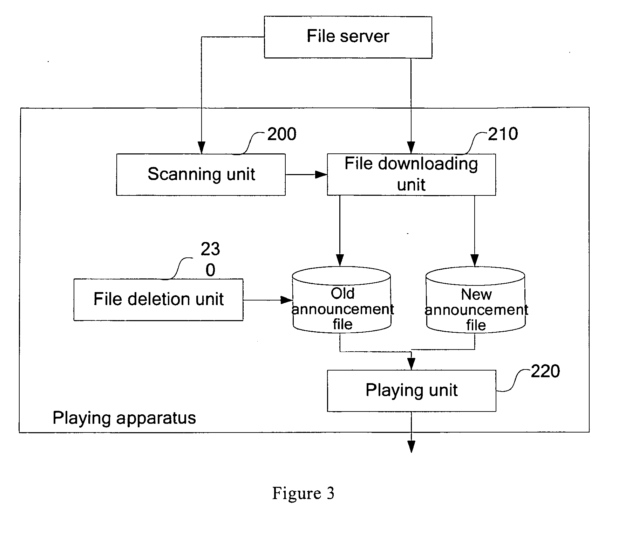

Figure 3 is a block diagram of a playing apparatus in an embodiment of the present invention. The playing apparatus includes:

a scanning unit 200, adapted to scan a storage area where a new announcement file is stored on a file server, or preferably, scan a storage area where a new announcement file is stored on a file server by using a timing mechanism, wherein the announcement file and the new announcement file for updating the announcement file are stored in different storage areas on the file server;

a file downloading unit 210, adapted to download the announcement file to be played from the file server to a local storage location, and when finding a new announcement file for updating the old local announcement file, download the new announcement file to a new local storage location, that is, store the new announcement file and old announcement file in different storage areas in a local storage medium; and

a playing unit 220, adapted to play an announcement based on the old local announcement file before downloading the new announcement file to a local storage location, and play an announcement based on the new local announcement file upon receipt of a request for playing the old announcement file after downloading the new file to a local storage location. That is, the playing unit 220 plays an announcement based on the old announcement file before the new announcement file is downloaded, and plays an announcement based on the new announcement file after the new announcement file is downloaded.

The playing apparatus may further include an optional file deletion unit 230, which is adapted to delete the old announcement file to be updated but not being played, after the new announcement file is downloaded to a local storage location. That is, after the new announcement file is downloaded, if the old announcement file is being used, the file deletion unit deletes the old announcement file only after the old announcement file is played so as to release the storage space.

It is evident that the scheme for updating an announcement in an embodiment of the present invention reduces the transmission loads of the file server and network and ensures that an announcement that is being played is updated successfully without being interrupted. Thus, the scheme updates an announcement that is being played while guaranteeing the performance of the announcement service. The benefits of the scheme are more obvious in a call center system with heavy traffic.

Another embodiment of the present invention provides a method and system for updating a multimedia file. The method and system are the same as the preceding method and system for updating a voice announcement (for example, announcement or prompt tone), but what is updated includes but is not limited to voice, audio, video and image files, which will not be described further.

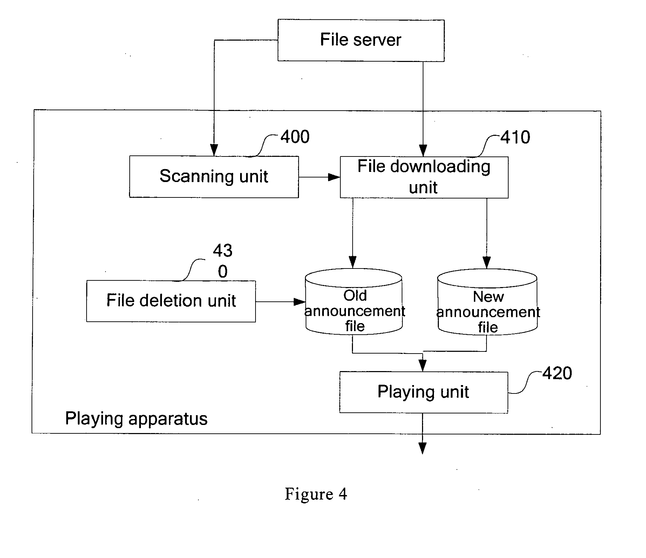

As shown in Figure 4, a playing apparatus provided in an embodiment of the present invention includes:

a scanning unit 400, adapted to scan a storage area where a new multimedia file is stored on a file server, or preferably, scan a storage area where a new multimedia file is stored on a file server by using a timing mechanism, wherein the multimedia file and the new file for updating the multimedia file are stored in different storage areas on the file server;

a file downloading unit 410, adapted to download the multimedia file to be played from the file server to a local storage location, and when finding a new multimedia file for updating the old local multimedia file, download the new multimedia file to a new local storage location, that is, store the new multimedia file and old multimedia file in different storage areas in a local storage medium; and

a playing unit 420, adapted to play the multimedia contents based on the old local multimedia file before downloading the new multimedia file to a local storage location, and play the multimedia contents based on the new local multimedia file upon receipt of a request for playing the old multimedia file after downloading the new multimedia file to a local storage location. That is, the playing unit 420 plays an announcement based on the old multimedia file before the new multimedia file is downloaded, and plays an announcement based on the new multimedia file after the new multimedia file is downloaded.

The playing apparatus may further include an optional file deletion unit 430, which is adapted to delete the old multimedia file to be updated but not being played, after the new multimedia file is downloaded to a local storage location. That is, after the new multimedia file is downloaded, if the old multimedia file is being used, the file deletion unit deletes the old multimedia file after the old multimedia file is played so as to release the storage space.

After study of the above embodiments, technicians in this field should understand that the invention may be implemented through software and general hardware platforms or through hardware only. In most cases, software plus general hardware platforms is a better way. Based on such understandings, the technical scheme provided in embodiments of the invention or contributions to the conventional art may be embodied in software products. The software is stored in a storage medium and incorporates several instructions to instruct a computer device, for example, a personal computer, a server, or a network device, to execute the method provided in the embodiments of the present invention. Although the invention has been described through some exemplary embodiments, the invention is not limited to such embodiments. Any modification, equivalent substitution, and improvement without departing from the spirit and principle of the invention should be covered in the scope of protection of the invention.

The preceding embodiments are exemplary embodiments of the present invention only and not intended to limit the present invention. Any modification, equivalent substitution or improvement without departing from the spirit and principle of the present invention should be covered in the scope of protection of the present invention.

## Claims

1. A method for updating, comprising:
storing in a new location a multimedia file for updating an old multimedia file that is being played; and
upon receipt of a request for playing the old multimedia file, retrieving and playing the new multimedia file in the new storage location.

2. The method of claim 1, further comprising: after playing the old multimedia file, deleting the old multimedia file.

3. The method of claim 1, wherein the new multimedia file and the old multimedia file are stored in different storage locations on a file server.

4. The method of claim 1, wherein the multimedia file comprises voice, video, audio and image files.

5. A system for updating, comprising:
a storage apparatus, adapted to store in a new location a new multimedia file for updating an old multimedia file that is being played; and
a playing apparatus, adapted to retrieve and play the new multimedia file in the new storage location upon receipt of a request for playing the old multimedia file.

6. The system of claim 5, further comprising: a file deletion apparatus, adapted to delete the old multimedia file after playing the old multimedia file.

7. A method for updating, comprising:
by a playing apparatus, downloading a multimedia file to be played from a file server to a local storage location, and playing multimedia based on the local multimedia file;
setting a storage area for storing new multimedia files on the file server, wherein a new multimedia file is adapted to update an old multimedia file on the file server;
by the playing apparatus, scanning the storage area for new multimedia files on the file server, and when finding the new file for updating the old local multimedia file, downloading the new file and storing the new file in a new local storage location; and upon receipt of a request for playing the old multimedia file, playing multimedia based on the new multimedia file stored in the new local storage location.

8. The method of claim 7, further comprising:
after downloading the new multimedia file to a local storage location, by the playing apparatus, deleting the old local multimedia file to be updated but not being played.

9. The method of claim 7, further comprising:
after a specified period of time, updating the old multimedia file based on the new multimedia file in the storage area for new multimedia files; and
deleting the new multimedia file in the storage area for new multimedia files.

10. The method of claim 7, wherein the playing apparatus scans the storage area for new multimedia files on the file server by using a timing mechanism.

11. The method of claim 7, wherein the multimedia file comprises voice, video, audio and image files.

12. A playing apparatus, comprising:
a scanning unit, adapted to scan a storage area for new multimedia files on a file server;
a file downloading unit, adapted to download a multimedia file to be played from the file server to a local storage location, and when the scanning unit finds a new file for updating an old local multimedia file, download the new file to a new local storage location; and
a playing unit, adapted to play multimedia based on the old local multimedia file before the file downloading unit downloads the new file to a local storage location, and play multimedia based on the new multimedia file stored in a new local storage location upon receipt of a request for playing the old multimedia file after the file download downloads the new file to a local storage location.

13. The playing apparatus of claim 11, further comprising a file deletion unit, adapted to delete the old local multimedia file to be updated but not being played, after the new file is downloaded to a local storage location.

14. The playing apparatus of claim 11, wherein the scanning unit scans the storage area for new multimedia files on the file server by using a timing mechanism.
